# EUROPEAN PATENT APPLICATION

(11) **EP 1 722 455 A1**
(43) Date of publication of application: **15.11.2006**
(21) Application number: 05291030.4
(22) Date of filing: 13.05.2005
(51) Int. Cl.: H02J 13/00

(54) **Method and device for controlling the supply of electric power to a part of an electric power network**

(71) Applicant: Mitsubishi Electric Information Technology Centre Europe B.V., 1119 NS Schiphol Rijk (NL); MITSUBISHI DENKI KABUSHIKI KAISHA, Chiyoda-ku Tokyo 100-8310 (JP)
(72) Inventor: Bonneville, Hervé c/o Mitsubishi Electric ITE, 35708 Rennes Cedex 7 (FR); Morel, Stéphane c/o Mitsubishi Electric ITE, 35708 Rennes Cedex 7 (FR)
(74) Representative: Saint-Marc-Etienne, Christophe Andréas

(57) **Abstract**

The present invention concerns a method for controlling the supply of electric power to a part of an electric power network wherein at least one electric appliance can be connected, characterised in that the method comprises the steps of :
- supplying, to the part of the electric power network, a human safe electric power,
- receiving a data frame, from the part of the electric power network,
- supplying, to the part of the electric power network, an operational electric power, enabling the electric appliance to operate according to the received data frame.

## Description

The present invention relates generally to the control of the supply of electric power to a part of an electric power network and more particularly, to the control of the supply of electric power through electric power sockets.

The distribution of electric power within residences or companies is commonly made through electric power sockets. The electric power is available anytime on the electric power sockets and when an electric appliance needs to be powered, users just need to connect it on the nearest available electric power socket. The fact that electric power is available anytime is sometime dangerous for people.

Some electric power sockets have been developed in order to cope with that problem. These electric power sockets are equipped with insulated closing members which avoid that any metallic element can be introduced unfortunately, for example, by a child, in one of the opening of the electric power socket. The only possibility to have access to the electric power is to introduce simultaneously a metallic element in all the openings of the electric power socket as it is done when an electric power plug is introduced in the electric power socket.

Such kind of electric power sockets avoid some accidents but not all, especially when two metallic elements are introduced simultaneously in the openings of the electric power socket.

Some other systems have been also developed. For example, differential circuit breakers are used to ensure the protection against a dangerous body current. When someone touches a live part of an electrical power network, the fault current then flows via the person as a body current to ground. The differential circuit breaker which is used for the protection against dangerous body currents, safely and rapidly, isolates the relevant circuits from the main power supply when the so-called rated fault current is exceeded.

Such systems cut the supply of electric power to all electric appliances connected to the isolated circuit. Differential circuit breakers may generate some further problems like the stop of the distribution of electric energy to lights, even if it is not required, as far as there is in general only one differential circuit breaker within a house.

The aim of the invention is therefore to propose a method which makes it possible to provide electric power distribution networks more safety for users. The present invention aims to prevent that users are in contact with the electric power instead of trying to solve the problem created once users are in contact with the electric power. The present invention aims also to control the access of electric power distribution networks to authorised electric appliances and/or to electric appliances which may not deteriorate the electric power network.

To that end, the present invention concerns a method for controlling the supply of electric power to a part of an electric power network, wherein at least one electric appliance can be connected, characterised in that the method comprises the steps of :
- supplying to the part of the electric power network a human safe electric power,
- receiving a data frame, from the part of the electric power network,
- supplying to the part of the electric power network, an operational electric power, enabling the electric appliance to operate according to the received data frame.

The present invention concerns also a device for controlling the supply of electric power to a part of an electric power network, wherein at least one electric appliance can be connected, characterised in that the device comprises :
- means for supplying, to the part of the electric power network, a human safe electric power,
- means for receiving a data frame, from the part of the electric power network, t
- means for supplying, to the part of the electric power network, an operational electric power enabling the electric appliance to operate according to the received data frame.

Thus, it is then possible to supply, within an electric power network, an operational electric power to only a part of the electric power network wherein an electric appliance is connected and which requires electric power.

By such selective supplying of electric power based on the reception of a data frame issued by an electric appliance, the access to the electric power by humans is avoided as far as humans can not generate such data frame.

By supplying a human safe electric power to a part of the electric power network as far as no data frame is received, the part of the electric power network is safe for users and it still allows the supplying, to an electric appliance connected to that part of the electric power network, an electric power which can be used to energize parts of the electric appliance when the electric appliance is in standby mode or to energize a communication module of the electric appliance.

According to a particular feature, it is determined if the data frame comprises at least a predetermined codeword, and the supplying, to the part of the electric power network, of the operational electric power enabling the electric appliance to operate, is made if the data frame comprises at least one predetermined codeword.

Thus, the recognition of a data frame generated by the electric appliances according to the invention is very simple to implement.

According to a particular feature, it is determined if the data frame comprises information representing the characteristics of the electric appliance, it is determined if the information representing the characteristics of the electric appliance comply with other information regarding the electric power network, and the supplying, to the part of the electric power network, of the operational electric power enabling the electric appliance to operate, is made if the information representing the characteristics of the electric appliance comply with other information regarding the electric power network.

Thus, if the characteristics of the electric appliance are representative of the power consumption of the electric appliance, it is possible to check if whether or not, the power consumption of the electric appliance corresponds to the capacity of the part of the electric power network, and then supply or not, to the part of the electric power network, the operational electric power enabling the electric appliance to operate in order to avoid any deterioration of the part of the electric power network or to prevent any possible breakdown due to overloading.

Thus, if the characteristics of the electric appliance are representative of information identifying the type of the electric appliance, it is then possible to limit the access of the operational electric power to certain types of electric appliances. It is possible also to create some authentication scenario of electric appliance before supplying it an operational electric power or to supply to the electric appliance, an operational electric power, during a certain time. It is possible also to be aware of all kinds of appliances which are connected to the electrical power network and then to create some scenarios with other electric appliances once the operational electric power is supplied to an electric appliance.

It is also possible to limit the access to the electric power network by an electric appliance according to the date and/or time. For example, when an electric appliance, like a personal computer, or a game console, is connected to the electric power network, the reception of information identifying its type allows to limit its access to the electric power network according to the date and/or time of the reception of the data frame.

Thus, if the characteristics of the electric appliance are representative of information identifying the address of the electric appliance, it is possible to establish some communication among electric appliances using their address or to control electric appliances from a server by sending to at least one electric appliance some messages.

Thus, if the characteristics of the electric appliance are representative of information identifying the voltage of the operational electric power enabling the operation of the electric appliance, it is possible avoid that an electric appliance, which needs a different electric operational voltage to operate than the one supplied by the electric power network, to be deteriorated.

According to a particular feature, it is received a data frame from the part of the electric power network, the data frame being transmitted by an electric appliance connected to the part of the electric power network, the data frame comprising information representing a stop or a future stop of the operational electric power consumption by the electric appliance, and it is supplied to the part of the electric power network a human safe electric power.

Thus, when an electric appliance doesn't need electric power, a human safe electric power is supplied to the part of the electric network. The part of the electric power network is safe.

By providing information representing a future stop, the electric power network supplies a human safe electric power which will be used by the electric appliance as a source of energy when it will enter into a standby mode.

According to a particular feature, the device comprises means for analysing the data frame and means for deciding if the operational electric power enabling the electric appliance to operate has to be supplied to the part of the electric power network.

According to a particular feature, at least one part of the device is included within an electric power socket and/or in an electric wiring cabinet of the electric power network and/or within a server associated to the electric power network.

Thus, by including at least one part of the device within electric power sockets, it is possible to control the supply of electric power directly to the access point of the electric power network. When several power sockets are connected on the same part of the electric power network like a branch of the electric power network, the access to the electric power is controlled for each electric power socket.

By including at least one part of the device within the wiring cabinet of the electric power network, the access to the electric power network is controlled branch by branch.

By including one part of the device within electric power sockets and the other part in the wiring cabinet, it is possible to reduce the cost of the system. The part of the device which is included in the wiring cabinet can be linked to a plurality of parts of devices which are included into electric power sockets.

According to a particular feature, the means for supplying to the part of the electric power network a human safe electric power, the means for receiving a data frame from the part of the electric power network, the means for supplying, to the part of the electric power network an operational electric power enabling the electric appliance to operate according to the received data frame, are comprised within the electric power socket.

According to a particular feature, the means for analysing the data frame and the means for deciding if the operational electric power enabling the electric appliance to operate has to be supplied to the part of the electric power network, are comprised within the electric power socket.

Thus, an electric power socket comprising the device according to the invention can control the supply of the electric power independently from other components of the electric power network.

According to still another aspect, the means for analysing the data frame and the means for deciding if the operational electric power enabling the electric appliance to operate has to be supplied to the part of the electric power network, are comprised within a server associated to the electric power network.

By including one part of the device within electric power sockets and the other part in a server associated to the electric power network, it is possible to reduce the cost of the system. The part of the device which is included in the server associated to the electric power network can control a plurality of parts of devices which are included into electric power sockets.

According to still another aspect, the present invention concerns a method for obtaining an operational electric power for an electric appliance, which is connected to a part of an electric power network, characterised in that the method comprises the steps of:
- obtaining a human safe electric power supplied by the part of the electric power network,
- transmitting a data frame to the part of an electric network, the data frame comprising information representing a request for obtaining, from the part of the electric power network, an operational electric power enabling the electric appliance to operate,
- transferring the operational electric power to the electric appliance enabling the electric appliance to operate.

According to still another aspect, the present invention concerns a device for obtaining an operational electric power for an electric appliance which is connected to a part of an electric power network, characterised in that the device comprises :
- means for obtaining a human safe electric power supplied by the part of the electric power network,
- means for transmitting a data frame to the part of an electric network, the data frame comprising information representing a request for obtaining, from the part of the electric power network, an operational electric power enabling the electric appliance to operate,
- means for transferring the operational electric power to the electric appliance enabling the electric appliance to operate.

Thus, it is then possible to supply, within an electric power network, an operational electric power to only a part of the electric power network when an electric appliance needs an operational electric power.

According to a particular feature, it is detected a stop or a future stop of the operational electric power consumption by the electric appliance and it is transferred a data frame to the part of the electric power network, the data frame comprising information representing the stop or a future stop of the operational electric power consumption by the electric appliance.

According to a particular feature, the device is included in the electric power plug of the electric appliance or in the electric appliance.

Thus, the electric appliances don't need to be modified, only the electric power plug needs to be modified. It is then possible to adapt smoothly existing electric appliances to the invention.

The present invention concerns also a message transferred on a part of an electric power network, characterised in that the message comprises at least one field comprising information representing a request for obtaining from the part of the electric power network an operational electric power enabling the electric appliance to operate.

According to still another aspect, the message comprises at least one field comprising information representing the characteristics of the electric appliance.

Since the features and advantages relating to the message are the same as those set out above related to the method and device according to the invention, they will not be repeated here.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 is a diagram representing an electric power network according to the invention ;
Fig. 2 is a block diagram of an electric power socket which comprises a device for controlling the supply of electric power to an electric appliance through an electric power plug according to a preferred embodiment ;
Fig. 3 is a block diagram of the decision module of the device for controlling the supply of electric power to a part of an electric power network ;
Fig. 4 is a block diagram of the system for controlling the supply of electric power to an electric appliance through an electric power plug according to a variant of realisation ;
Fig. 5 is an algorithm executed by the decision module of the device for controlling the supply of electric power to a part of an electric power network ;
Fig. 6 is a block diagram of the communication module according to the invention which is included in an electric power plug or in an electric appliance ;
Fig. 7 is an algorithm executed by the communication module according to the invention which is included in an electric power plug or in an electric appliance.

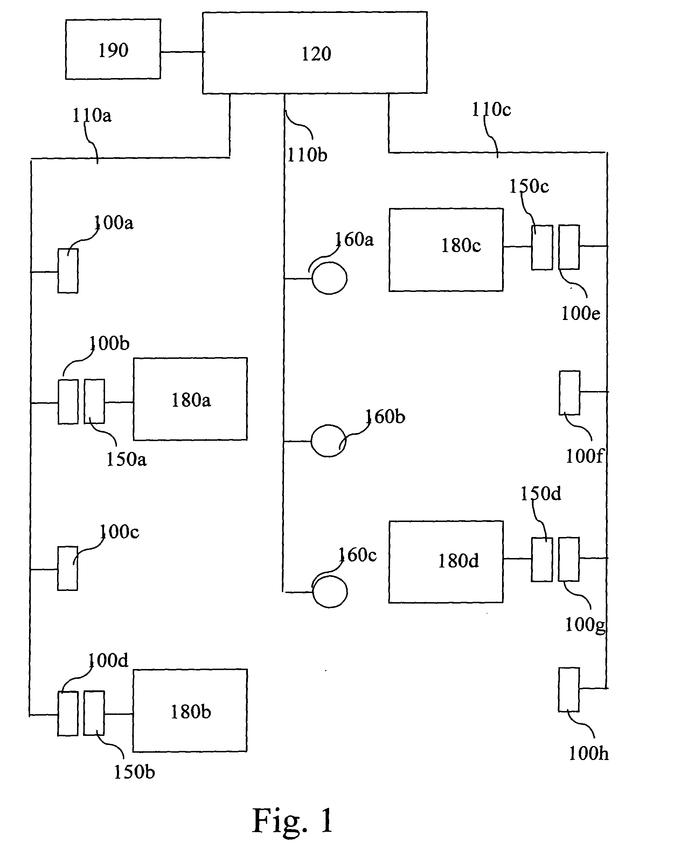

**Fig. 1** is a diagram representing an electric power network according to the invention.

The electric power network is preferably included within residences or companies.

In a home or an office or a company, the control and the distribution of electric power is classically made from a wiring cabinet 120. The wiring cabinet 120 distributes electric power through several branches 110 of the electric power network. Some branches are used for the distribution of energy for lights 160a, 160b and 160c like the branch noted 110b in the Fig. 1. Some other branches are used for the distribution of electric power for electric power sockets 100 like the branches noted 110a and 110c in the Fig. 1.

Some electric appliances 180a, 180b, 180c and 180d are connected respectively to the electric power sockets 100b, 100d, 100e and 100g through respectively the electric power plugs 150a, 150b, 150c and 150d.

According to the invention, the electric power sockets 100 comprise at least a part of a device for controlling the supply of electric power according to the invention.

According to the invention the wiring cabinet comprises also some devices or parts of some devices for controlling the supply of electric power according to the invention.

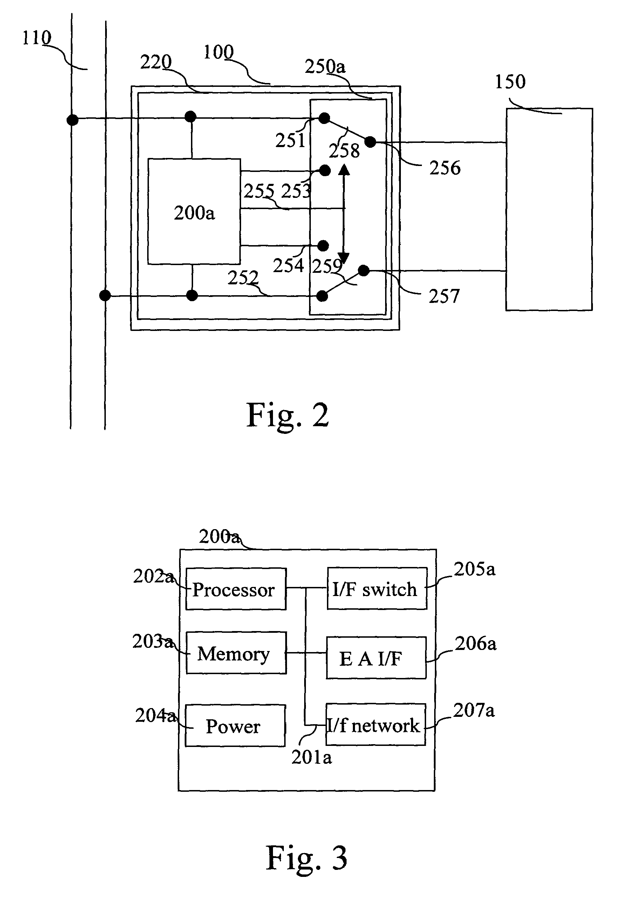

A server 190 is associated to the electric power network, for example, through the wiring cabinet 120. The server 190 is, for example, a personal computer. The server is linked to the wiring cabinet 120 using, as example, a classical serial link. In a variant, the server 190 is associated to the electric power network through a socket 100 and has an interface which permit to transmit or receive data frames to or from the devices for controlling the supply of electric power. The server 190 comprises, in a variant of realisation, at least parts of the decision module which will be described in reference to the Fig. 3.

When no electric appliance is connected to an electric power socket 100, like the electric power sockets 100a, 100c, 100f and 100h, the electric power sockets 100a, 100c, 100f and 100h supply a human safe electric power.

A human safe electric power is an electric power which has a low voltage and/or current which doesn't injure humans which are in contact with it. The voltage is, for example, below 25 Volts, and more preferably equal to a continuous voltage of 3.3 or 5 Volts or 12 Volts. The human safe electric power is also preferably limited to a current of few milliamps. It has to be noted also that the human safe electric power can be also an alternative low voltage limited to few milliamps.

An operational electric power is an electric power which is commonly used in electric power networks. It supplies an alternative electric power of 100 Volts or 230 Volts or 360 Volts.

The electric appliance 180a is, for example, a personal computer and the electric appliance 180b is, for example, a printer.

The electric appliance 180c is, for example, a TV and the electric appliance 180d is, for example, a DVD player. It can be also any device like a coffee machine or a vacuum cleaner or a lamp.

**Fig. 2** is a block diagram of an electric power socket which comprises a device for controlling the supply of electric power to an electric appliance through an electric power plug according to a preferred embodiment.

The device 220 for controlling the supply of electric power is, in a preferred embodiment, included within an electric power socket 100. The electric power socket 100 is connected to a branch 110a or 110c of the electric power network. The branches 110 are, for example, made of two conductors. Obviously, a larger number of conductors can be used in the electric power network according to the present invention. Ground conductors can also be included in the present invention as multiple phases electric power networks.

The device 220 for controlling the supply of electric power comprises two modules noted 200a and 250a. The module 250a comprises means for supplying, to the part of the electric power network, a human safe electric power, means for receiving a data frame from the part of the electric power network and means for supplying to a part of the electric power network an operational electric power enabling the electric appliance to operate according to the received data frame.

The module 250a is a switching module. According to command signals generated by the decision module 200a, the switching module 250a supplies a human safe electric power or an operational electric power to the part of the electric power network noted 256 and 257 made by the two openings of the electric power socket 100. The switching module 250a comprises a first switch 258, which is connected to the wire 251 which is a part of the branch 110 supplying an operational electric power. The switch 258 is also connected to the wire 253, which gives access to the human safe electric power. The switching module 250a comprises a second switch 259, which is connected to the wire 252, which is a part of the branch 110 supplying an operational electric power. The switch 259 is also connected to the wire 254, which gives access to the human safe electric power.

The decision module 200a provides a signal through wires noted 255 in Fig. 2. This signal commands the switches 258 and 259 in order to enable the human safe electric power to be available on the two openings 256 and 257 of the electric power socket 100. The human safe electric power is supplied to the switching module 250a using wires noted 253 and 254 in Fig. 2.

The decision module 200a provides a signal through wires noted 255 which command the switches 258 and 259 in order to authorize the operational electric power to be the available on the two openings 256 and 257 of the electric power socket 100. The operational electric power is supplied to the switching module 250a through wires noted 251 and 252 in Fig. 2.

The decision module 200a will be described in more details in reference to Fig. 3.

It has to be noted here that when a single electric power socket is connected on a branch 110 of the electric power network, the device 220 for controlling the supply of electric power is integrated as a whole in the wiring cabinet 120.

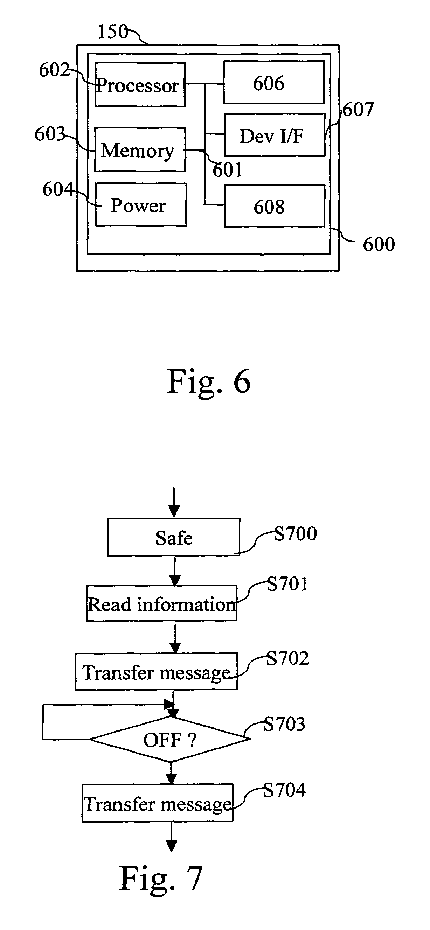

When an electric appliance 180 is connected to the electric power socket 100 through an electric power plug 150, it has access to a human safe electric power or an operational electric power through the openings 256 and 257 of the electric power socket 100. The electric power plug 150 comprises a communication module according to the invention. In a variant of realisation, the communication module is included in the electric appliances 180. The communication module will be described in more details in reference to the Fig. 6.

**Fig. 3** is a block diagram of the decision module of the device for controlling the supply of electric power to a part of an electric power network.

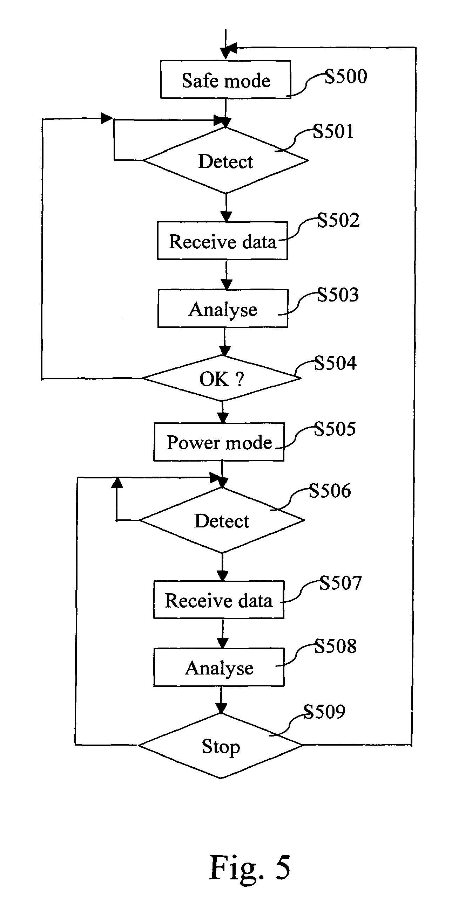

The decision module 200a has, for example, an architecture based on components connected together by a bus 201 and a processor 202 controlled by a program as disclosed in Fig. 5. The decision module 200a can be integrated in one or several integrated circuits.

The decision module 200a comprises memory means 203a made by at least one random access memory and a non-volatile memory.

The bus 201a links the processor 202a to the memory means 203a, an interface 205a which controls, according to the preferred embodiment, one switching module 250a, an interface with electric appliances 206a, a power supply 204a and an optional network interface 207a.

The memory 203a contains registers intended to receive variables, digital data, predetermined codeword and intermediate processing values. The memory stores the program which enables the module and, in particular, the processor 202a, to operate. The processor 202a controls the operation of the principal components of the decision module 200a.

The interface 205a provides a signal through wires 255 which commands the switching module 250a in order to enable the operational electric power or the human safe electric power to be the available on the two openings 256 and 257 of the electric power socket 100. For example, when the operational electric power needs to be supplied through the openings 256 and 257 of the electric power socket 100, a DC voltage of 5 Volts is generated. When the available or the human safe electric power needs to be supplied on the openings 256 and 257 of the electric power socket 100, a DC voltage of zero volt is generated.

The electric appliance interface 206a is linked to the wires 253 and 254 and to the wires 251 and 252 shown in the Fig. 2. The electric appliance interface 206a is able to receive and decode data frames transmitted by an electric appliance which is connected to the electric power socket 100.

The electric appliance interface 206a is able to decode data frames which are coded under the form of consecutive pulses of a certain width and/or frequency and/or duty cycle. The electric appliance interface 206a is able to demodulate data frames which are modulated using amplitude modulation and/or frequency modulation and/or phase modulation.

In a variant of realisation, the electric appliance interface 206a is able to transfer data frames to an electric appliance which is connected to the part of electric power network.

The network interface 207a is an interface which allows the decision module 200a to exchange information with one or several similar decision modules 200a through the electric power network or with the server 190 through the electric power network or using dedicated media like a wireless network or an Ethernet link. Such information are, for example, the identifier of the type of electric appliance which is connected to the electric power network, the power consumption of the electric appliance or the type of the electric appliance or its identifier. Thanks to that exchange of information among decision modules, it is then possible to be aware of all electric appliances which are connected to each electric power sockets of the electric power network.

The power supply 204a is connected to the branch 110 and transforms the electric power, which is equal to the operational electric power, in a human safe electric power. The human safe electric power is supplied to the switching module 250a. The power supply 204a supplies also the necessary electric power for the decision module 200a.

It has to be noted here that, in a variant of realisation, the human safe electric power is not supplied by the power supply 204a. In such variant, the human safe electric power is supplied through dedicated wires to the switching module 250a by a power supply located in the wiring cabinet 120.

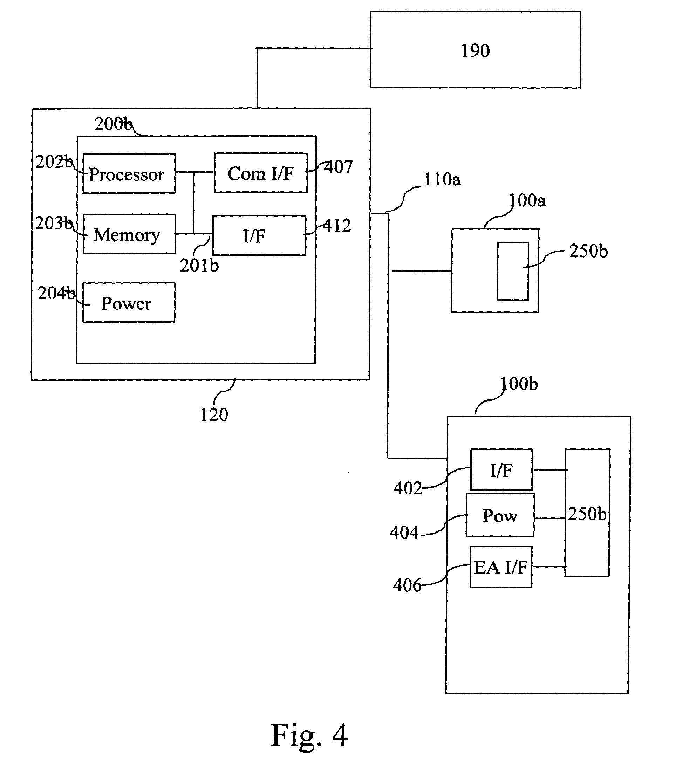

**Fig. 4** is a block diagram of the system for controlling the supply of electric power to an electric appliance through an electric power plug according to a variant of realisation.

In the variant of realisation of the Fig. 4, the device for controlling the supply of electric power to an electric appliance 220 is divided into two parts 200b and 250b located at different locations of the electric power network.

According to that variant of realisation, each electric power plug 100b comprises a switching module 250b which is similar to the switching module 250a as disclosed previously in the Fig. 2, a power supply unit 404, a network interface 402 and an electric appliance interface EA IF 406.

The power supply 404 is connected to the branch 110 and transforms the electric power, which is equal to the operational electric power, in a human safe electric power. The human safe electric power is supplied to the switching module 250b. The power supply 404 supplies also the necessary electric power for the network interface 402.

The network interface 402 is an interface which allows the transfer of data frames received from any electric appliance 180 to the decision module 200b. The network interface is also able to receive command signal generated by the decision module 200b in order to supply through the part of the electric power network constituted by the openings of the socket 100b, a human safe electric power or an operational electric power.

The electric appliance interface 406 is identical to the electric appliance 206a of the Fig. 3.

The decision module 200b is located, for example, in the wiring cabinet 120.

The decision module 200b controls a plurality of switching modules 250b. Each switching module 250b transfers to the decision module 200b, the received data frames. In response, the decision module 200b send command signals to the respective switching modules 250b enabling the supplying of a human safe electric power or an operational electric power, through the respective switching modules 250b.

The command signal is either transferred through dedicated wires associated to the branch 110a or using the branch 110a as a transmission medium.

The decision module 200b has, for example, an architecture based on components connected together by a bus 201 b and a processor 202b controlled by a program as disclosed in Fig. 5. The decision module 200b can be integrated in one or several integrated circuits.

The decision module 200b comprises memory means 203a made by at least one random access memory and a non-volatile memory.

The bus 201 b links the processor 202b to the memory means 203b, an electric appliance interface 412 which controls, several switching modules 250b, an optional communication interface 407. The decision module 200b comprises also a power supply 204b.

The memory 203b contains registers intended to receive variables, digital data and intermediate processing values. The memory stores the program which enables the module and, in particular, the processor 202b, to operate. The processor 202b controls the operation of the principal components of the decision module 200b.

The interface 412 provides command signals, through dedicated wires associated to the branch 110 or using branch 110 as a medium of transmission, in order to enable the operational electric power or the human safe electric power to be the available on the two openings of the electric power sockets 100.

The electric appliance interface 412 is also able to decode data frames which are coded under the form of consecutive pulses of a certain width and/or frequency and/or duty cycle. The electric appliance interface 412 is able to demodulate data frames which are modulated using amplitude modulation and/or frequency modulation and/or phase modulation.

In a variant of realisation, the decision module 200b comprises a communication interface 407 which enables exchange of information with the server 190. In such variant, the server 190 collects all the characteristics of the electric appliances connected to the electric power network from the decision module 200b which is comprised in the wiring cabinet 120.

The power supply 204b is connected to the branch 110 and transforms the electric power, which is equal to the operational electric power, into electric power for the decision module 200b.

The decision module 250b or the server 190 decide the supplying or not of the operational electric power according to the at least one predetermined codeword comprised in the data frame.

The decision module 250b or the server 190 collect all the characteristics of the electric appliance connected to the electric power network. The decision module 250b or the server 190 decide if the operational electric power enabling the electric appliance to operate has to be supplied or not to the part of the electric power network according to information representing the characteristics of the electric appliance comprised within a data frame or according to the information representing the characteristics of the electric appliance and other information regarding the electric power network. Such other information regarding the electric power network are, as example, a list of authorised electric appliances, the power consumption of electric appliances, the type of electric appliances, the location of the electric power socket.

**Fig. 5** is an algorithm executed by the decision module of the device for controlling the supply of electric power to a part of an electric power network.

The code of this flow chart is for example stored in the memory 203. The decision module 200 executes the instructions associated to the algorithm described in the Fig. 5.

At step S500, the processor 202 of the decision module 200 configures the switching module 250 in a safe mode according to the present invention. The processor 202 transfers command signal to the switch interface 205. The switch interface 205 transfers in response, according to the preferred embodiment, a signal through wires 255 or, according to the variant, through the branch 110 or through wires associated with the branch 110, to the switching module 250, in order to make available a human safe power through the part of the electric power network constituted by the openings of the electric power sockets.

At next step S501, the processor 202 checks if the interface for electric appliance 206 of the decision module 200 has received a data frame from the lines 253 and 254 of the device 220 for controlling the supply of electric power according to the preferred embodiment, or, according to the variant, through the branch 110 or through wires associated with the branch 110.

As far as no data frame is received, the processor 202 executes the step S501.

When a data frame has been received by the interface for electric appliance 206, the processor 202 moves to step S502.

The data frame is decoded or demodulated and transferred to the memory means 203 of the decision module 200 at step S502.

At the following step S503, the processor 202 analyses the content of the received data frame.

The analysis can be simple or more complex.

If the data frame comprises a predetermined codeword, for example, a group of several bits, the analysis can be a comparison with the received bits and a group of bits stored in the memory 203.

The analysis can also be coupled with a date and/or time table stored in the memory 203. If the comparison is successful and the date and/or time of the detection of the data frame provided by the processor clock corresponds to allowed period stored in the date and/or time table, the analysis is completed.

The analysis can also be coupled also to the topology of the electric power network, i.e., the location of the electric socket 110 where the electric appliance is connected to.

If the data frame comprises the power consumption of the electric appliance, the processor 202 checks if, whether or not, the power consumption of the electric device can be supplied by the part of the electric power network. In a variant of realisation, it is checked if, whether or not, the power consumption of the electric appliance can be accepted by the branch where the device 220 for controlling the supply of electric power is connected or by the electric power network itself.

If the data frame comprises the type of electric appliance, the processor 202 checks if, whether or not, the type of electric appliance can be accepted on the branch 110 of which the device 220 for controlling the supply of electric power is connected. For example, if the electric power network is an uninterruptible power supply, it is useful to check whether or not electric appliances like fans, lights or else may have access to the power resources. It is also useful to know what kind of electric appliances are connected on the electric power network. Such information can be centralized in the server 190 associated to the electric power network.

It has to be noted here that, according to the preferred embodiment, the decoded or demodulated data frame is also transferred on the power network through the network interface 207.

When the analysis is completed, the processor 202 moves to step S504.

At step S504, the processor 202 allows or not, the access to the operational electric power.

If the data frame received is a predetermined data frame and/or if the date and/or time of reception of the data frame is in accordance with the date and/or time table and/or if the power consumption of the electric appliance is acceptable and/or if the type of electric appliance can be accepted on the branch 110 of the electric power network, the processor moves to step S505. On the contrary, the processor 202 returns to step S501 of the present algorithm.

At step S505 the processor 202 configures the device 220 in an operational power mode according to the present invention.

The processor 202 transfers a command to the switch interface 205. According to the preferred embodiment, the switch interface 205 transfers a command signal, through wires 255 to the switching module 250, enabling the deliver of the operational electric power available on wires 251 and 252, to the part of the electric power network constituted by the openings of the electric power sockets. According to the variant, the switch interface 205 transfers, a command signal to the switching module 250 through the branch 110 or through wires associated to the branch 110, enabling the deliver of the operational electric power through the part of the electric power network constituted by the openings of the electric power sockets.

It has to be noted here that, in a variant, the processor 202 waits a random time comprised between zero and few seconds before transferring the command to the switch interface 205. Such random time avoids that the operating electric power is supplied simultaneously to several electric appliances.

At next step S506, the processor 202 checks if the interface for electric appliance 206 of the decision module 200 has received a data frame from the lines 251 and 252 of the device 220 for controlling the supply of electric power.

As far as no data frame is received, the processor 202 executes the step S506.

When a data frame has been received by the interface for electric appliance 206, the processor 202 moves to step S507.

The data frame is decoded or demodulated and transferred to the memory means 203 of the decision module 200 at step S507.

At the following step S508, the processor 202 analyses the content of the received data frame.

At step S509, the processor 202 checks if the data frame represents a stop or a future stop of the operational electric power consumption by the electric appliance.

If the data frame represents a stop or a future stop, the processor 202 moves to step S500. If the data frame doesn't represent a stop or a future stop, the processor 202 return to step S506.

It has to be noted that in a variant which is disclosed here, the electric appliances can generate periodically the data frame as detected in step S501. When such signal is not received on a periodical base, it means that the electric appliance has been powered off, the processor 202 moves to step S500 already described.

**Fig. 6** is a block diagram of the communication module according to the invention which is included in an electric power plug or an electric appliance.

The communication module 600 has an architecture based on components connected together by a bus 601 and a processor 602 controlled by a program as disclosed in Fig. 7. The communication module 600 can be integrated in one or several integrated circuits.

The communication module 600 comprises memory means 603 made by at least one random access memory and a non-volatile memory. The memory means 603 store a predetermined codeword or the characteristics of the electric appliance.

The bus 601 links the processor 602 to the memory means 603, the interfaces 606, 608 and an interface with the electric appliance 607.

The random access memory contains registers intended to receive variables, digital data and intermediate processing values. The non-volatile memory stores the program which enables the module and, in particular, the processor 602, to operate. The processor 602 controls the operation of the principal components of the communication module 600.

The interface 608 is able to send data frames which are coded under the form of consecutive pulses of a certain width and/or frequency and/or duty cycle. The interface 606 is able to send data frames which are modulated using amplitude modulation and/or frequency modulation and/or phase modulation.

The interface 608 is able to receive data frames from the electric power network. Such data frames are received during a configuration procedure and comprise, as example, a predetermined codeword.

The received codeword will be the codeword transmitted in the data frame according to the invention and being representative of a request for obtaining from the part of the electric power network an operational electric power enabling the electric appliance to operate.

The communication module 600 is able to transfer to the electric power network and more precisely, to the electric power socket it is linked to, through the interface 608, information like a data frame comprising a predetermined codeword or the characteristics of the electric appliance which is associated to the communication module 600 and/or the power consumption of the electric appliance and/or the type of the electric appliance and/or the voltage required for the operation of the electric appliance.

The interface 606 is able to detect a human safe electric power which is available from one of the opening of the electric power socket it is connected, get the necessary power to energize the communication module 600 through the power supply 604 in order to allow a transfer of the data frame according to the invention.

The interface for electric appliance 606 allows also the transfer of the operational electric power to the electric appliance 180.

In a variant of realization, the interface 606 allows also the transfer of the human safe electric power to the electric appliance when the electric appliance is in standby mode. The human safe electric power is then used to energize the components of the electric appliance which are in charge of detecting a change from standby mode to power on mode of the electric appliance.

In a variant of realisation, the communications module 600 comprises also an interface for electric appliance 607. The interface for electric appliance 607 permits the reception of information from the electric appliance. Such information are by example, information representing the fact that the electric appliance will move from a power off state or a standby state to an operational state. Such information are also information representing the fact that the electric appliance will move from an operational state to a power off state or a standby state.

It has to be noted here that the communications module 600 is in the example of the Fig. 6 included in an electric power plug 150. It can be also included within the electric appliance or in the external power supply unit of the electric appliance.

**Fig. 7** is an algorithm executed by the communication module according to the invention which is included in an electric power plug or an electric appliance.

The code of this flow chart is for example stored in non volatile memory.

At step S700, a human safe electric power is supplied by the electric power network. Such electric power energizes the communication module 600. Once the communication module is energized, the algorithm moves to step S701.

In a variant of realisation, the processor 602 is able to receive signals, from the electric appliance of which the communication module 600 is associated to, through the interface for electric appliance 607. Signals are by example, information representing the fact that the electric appliance will move from a power off state or a standby state to an operational state. In such case, the algorithm moves also to step S701.

At step S701, the processor 602 reads information stored in the memory 603. Information are a predetermined codeword or information representing the characteristics of the electric appliance like the power consumption of the electric appliance and/or information identifying the type of the electric appliance and/or an address of the electric appliance and/or the voltage required for the operation of the electric appliance.

At step S702, the processor 602 transfers the read information to the interface 606 which transfers a data frame to the switching module 250 it is linked to. Such data frame is the data frame detected at the step S501 of the algorithm of the Fig. 5.

The transferred data frame comprises at least one field comprising information representing a request for obtaining, from the switching module 250 it is linked to, an operational electric power enabling the electric appliance to operate.

The information representing the request for obtaining an operational electric power is a predetermined codeword or information representing the characteristics of the electric appliance.

It has to be noted here that in a variant, the interface 606 transfers periodically the data frame to the device 220 it is linked to as far as the electric appliance is in power on mode.

Once the data frame is transmitted, the operational electric power is transferred to the electric appliance through the interface for electric appliance 606.

At next step S703, the processor 602 checks whether or not a signal is received from the interface for electric appliance 607. Such signal represents the fact that the electric appliance will move from an operational state to a power off state or a standby state. As far as no signal is received, the processor 602 executes the step S703.

When the signal is received from the interface for electric appliance 607, the processor 602 moves to step S704 and transfers a predetermined code to the interface 606 which transfers a data frame representing a stop or a future stop of the operational electric power consumption by the electric appliance through the power cable.

Naturally, many modifications can be made to the embodiments of the invention described above without departing from the scope of the present invention.

As example, the device for controlling the supply of electric power to a part of an electric power network is integrated within a multi socket power extension lead.

## Claims

1. Method for controlling the supply of electric power to a part of an electric power network (256, 257), wherein at least one electric appliance (180) can be connected, **characterised in that** the method comprises the steps of :
- supplying, (S500) to the part of the electric power network, a human safe electric power,
- receiving (S501) a data frame, from the part of the electric power network,
- supplying (S505), to the part of the electric power network, an operational electric power, enabling the electric appliance to operate according to the received data frame.

2. Method according to claim 1, **characterised in that** the method comprises the further step of determining (S503) if the data frame comprises at least a predetermined codeword, and **in that** the supplying to the part of the electric power network the operational electric power enabling the electric appliance to operate, is made if the data frame comprises the at least one predetermined codeword.

3. Method according to claim 1, **characterised in that** the method comprises the further step of :
- determining if the data frame comprises information representing the characteristics of the electric appliance,
- determining if the information representing the characteristics of the electric appliance comply with other information regarding the electric power network,
and **in that** the supplying, to the part of the electric power network, of the operational electric power enabling the electric appliance to operate, is made if the information representing the characteristics of the electric appliance comply with other information regarding the electric power network.

4. Method according to any of the claims 1 to 3, **characterised in that** the method comprises further steps of :
- receiving (S507) a data frame from the part of the electric power network, the data frame being transmitted by an electric appliance connected to the part of the electric power network, the data frame comprising information representing a stop or a future stop of the operational electric power consumption by the electric appliance,
- supplying (S500) to the part of the electric power network a human safe electric power.

5. Device for controlling the supply of electric power to a part of an electric power network, wherein at least one electric appliance can be connected, **characterised in that** the device comprises :
- means for supplying,(250) to the part of the electric power network, a human safe electric power,
- means for receiving (206) a data frame, from the part of the electric power network,
- means for supplying, (250) to the part of the electric power network, an operational electric power enabling the electric appliance to operate according to the received data frame.

6. Device according to claim 5, **characterised in that** the device comprises means for analysing (202) the data frame and means for deciding if the operational electric power enabling the electric appliance to operate has to be supplied to the part of the electric power network.

7. Device according to claim 6, **characterised in that** the means for analysing the data frame determine if the data frame comprises at least a predetermined codeword and **in that** the means for deciding if the operational electric power enabling the electric appliance to operate has to be supplied to the part of the electric power network, decide the supplying of the operational electric power according to the at least one predetermined codeword.

8. Device according to claim 6, **characterised in that** the means for analysing the data frame determine if the data frame comprises information representing the characteristics of the electric appliance, and **in that** the means for deciding if the operational electric power enabling the electric appliance to operate has to be supplied to the part of the electric power network decide the supplying of the operational electric power according to information representing the characteristics of the electric appliance.

9. Device according to any of the claims 5 to 8, **characterised in that** at least one of the means of the device is comprised within an electric power socket (100) and/or in an electric wiring cabinet (120) of the electric power network and/or in a server (190) associated to the electric power network.

10. Device according to claim 9, **characterised in that** the means for supplying to the part of the electric power network a human safe electric power, the means for receiving a data frame from the part of the electric power network, the means for supplying to the part of the electric power network an operational electric power enabling the electric appliance to operate according to the received data frame are comprised within the electric power socket.

11. Device according to claim 10, **characterised in that** the means for analysing the data frame and the means for deciding if the operational electric power enabling the electric appliance to operate has to be supplied to the part of the electric power network are comprised within the electric power socket.

12. Device according to claim 10, **characterised in that** the means for analysing the data frame and the means for deciding if the operational electric power enabling the electric appliance to operate has to be supplied to the part of the electric power network are comprised within a the wiring cabinet or in a server associated to the electric power network.

13. Method for obtaining an operational electric power for an electric appliance which is connected to a part of an electric power network, **characterised in that** the method comprises the steps of:
- obtaining (S700) a human safe electric power supplied by the part of the electric power network,
- transmitting (S702) a data frame to the part of an electric network, the data frame comprising information representing a request for obtaining, from the part of the electric power network, an operational electric power enabling the electric appliance to operate,
- transferring the operational electric power to the electric appliance enabling the electric appliance to operate.

14. Method according to claim 13, **characterised in that** the method comprises further steps of :
- detecting (S703) a stop or a future stop of the operational electric power consumption by the electric appliance,
- transferring (S704) a data frame to the part of the electric power network, the data frame comprising information representing the stop or a future stop of the operational electric power consumption by the electric appliance.

15. Device for obtaining an operational electric power for an electric appliance which is connected to a part of an electric power network, **characterised in that** the device comprises :
- means (606) for obtaining a human safe electric power supplied by the part of the electric power network,
- means (608) for transmitting a data frame to the part of an electric network, the data frame comprising information representing a request for obtaining, from the part of the electric power network, an operational electric power enabling the electric appliance to operate,
- means (606) for transferring the operational electric power to the electric appliance enabling the electric appliance to operate.

16. Device according to claim 15, **characterised in that** the device comprises :
- means for detecting a stop or a future stop of the operational electric power consumption by the electric appliance,
- means (608) for transferring a data frame to the part of the electric power network, the data frame comprising information representing the stop or a future stop of the operational electric power consumption by the electric appliance.

17. Device according to claim 16, **characterised in that** the device is included in the electric power plug of the electric appliance or in the electric appliance.

18. Message transferred on a part of an electric power network, **characterised in that** the message comprises at least one field comprising information representing a request for obtaining from the part of the electric power network an operational electric power enabling the electric appliance to operate.

19. Message according to claim 18, **characterised in that** the message comprises at least one field comprising information representing the characteristics of the electric appliance.

20. Computer program which can be directly loadable into a programmable device, comprising instructions or portions of code for implementing the steps of the method according to claims 1 to 4, when said computer program is executed on a programmable device.

21. Computer program which can be directly loadable into a programmable device, comprising instructions or portions of code for implementing the steps of the method according to claims 13 to 14, when said computer program is executed on a programmable device.

## Amended claims

### Amended claims in accordance with Rule 86(2) EPC.

**1.** Method for controlling the supply of electric power to a part of an electric power network (256, 257), wherein at least one electric appliance (180) can be connected, **characterised in that** the method comprises the steps of :
- supplying, (S500) to the part of the electric power network, a human safe electric power,
- receiving (S501) a data frame, from the part of the electric power network,
- determining if the data frame comprises information representing the characteristics of the electric appliance,
- determining if the information representing the characteristics of the electric appliance comply with other information regarding the electric power network,
- supplying (S505), to the part of the electric power network, an operational electric power, enabling the electric appliance to operate if the information representing the characteristics of the electric appliance comply with other information regarding the electric power network.

**2.** Method according to claim 1, **characterised in that** the method comprises the further step of determining (S503) if the data frame comprises at least a predetermined codeword, and **in that** the supplying to the part of the electric power network the operational electric power enabling the electric appliance to operate, is made if the data frame comprises the at least one predetermined codeword.

**3.** Method according to any of the claim 1 or 2, **characterised in that** the method comprises further steps of :
- receiving (S507) a data frame from the part of the electric power network, the data frame being transmitted by an electric appliance connected to the part of the electric power network, the data frame comprising information representing a stop or a future stop of the operational electric power consumption by the electric appliance,
- supplying (S500) to the part of the electric power network a human safe electric power.

**4.** Device for controlling the supply of electric power to a part of an electric power network, wherein at least one electric appliance can be connected, **characterised in that** the device comprises :
- means for supplying (250), to the part of the electric power network, a human safe electric power,
- means for receiving (206) a data frame, from the part of the electric power network,
- means for determining if the data frame comprises information representing the characteristics of the electric appliance,
- means for determining if the information representing the characteristics of the electric appliance comply with other information regarding the electric power network,
- means for supplying (250), to the part of the electric power network, an operational electric power, enabling the electric appliance to operate if the information representing the characteristics of the electric appliance comply with other information regarding the electric power network.

**5.** Device according to claim 4, **characterised in that** the device comprises means for analysing (202) the data frame and means for deciding if the operational electric power enabling the electric appliance to operate has to be supplied to the part of the electric power network.

**6.** Device according to claim 5, **characterised in that** the means for analysing the data frame determine if the data frame comprises at least a predetermined codeword and **in that** the means for deciding if the operational electric power enabling the electric appliance to operate has to be supplied to the part of the electric power network, decide the supplying of the operational electric power according to the at least one predetermined codeword.

**7.** Device according to claim 5, **characterised in that** the means for analysing the data frame determine if the data frame comprises information representing the characteristics of the electric appliance, and **in that** the means for deciding if the operational electric power enabling the electric appliance to operate has to be supplied to the part of the electric power network decide the supplying of the operational electric power according to information representing the characteristics of the electric appliance.

**8.** Device according to any of the claims 4 to 7, **characterised in that** at least one of the means of the device is comprised within an electric power socket (100) and/or in an electric wiring cabinet (120) of the electric power network and/or in a server (190) associated to the electric power network.

**9.** Device according to claim 8, **characterised in that** the means for supplying to the part of the electric power network a human safe electric power, the means for receiving a data frame from the part of the electric power network, the means for supplying to the part of the electric power network an operational electric power enabling the electric appliance to operate according to the received data frame are comprised within the electric power socket.

**10.** Device according to claim 9, **characterised in that** the means for analysing the data frame and the means for deciding if the operational electric power enabling the electric appliance to operate has to be supplied to the part of the electric power network are comprised within the electric power socket.

**11.** Device according to claim 9, **characterised in that** the means for analysing the data frame and the means for deciding if the operational electric power enabling the electric appliance to operate has to be supplied to the part of the electric power network are comprised within a the wiring cabinet or in a server associated to the electric power network.

**12.** Method for obtaining an operational electric power for an electric appliance which is connected to a part of an electric power network, **characterised in that** the method comprises the steps of:
- obtaining (S700) a human safe electric power supplied by the part of the electric power network,
- transmitting (S702) a data frame to the part of an electric network, the data frame comprising information representing a request for obtaining, from the part of the electric power network, an operational electric power enabling the electric appliance to operate and information representing the characteristics of the electric appliance,
- transferring the operational electric power to the electric appliance enabling the electric appliance to operate.

**13.** Method according to claim 12, **characterised in that** the method comprises further steps of :
- detecting (S703) a stop or a future stop of the operational electric power consumption by the electric appliance,
- transferring (S704) a data frame to the part of the electric power network, the data frame comprising information representing the stop or a future stop of the operational electric power consumption by the electric appliance.

**14.** Device for obtaining an operational electric power for an electric appliance which is connected to a part of an electric power network, **characterised in that** the device comprises :
- means (606) for obtaining a human safe electric power supplied by the part of the electric power network,
- means (608) for transmitting a data frame to the part of an electric network, the data frame comprising information representing a request for obtaining, from the part of the electric power network, an operational electric power enabling the electric appliance to operate and information representing the characteristics of the electric appliance,
- means (606) for transferring the operational electric power to the electric appliance enabling the electric appliance to operate.

**15.** Device according to claim 14, **characterised in that** the device comprises :
- means for detecting a stop or a future stop of the operational electric power consumption by the electric appliance,
- means (608) for transferring a data frame to the part of the electric power network, the data frame comprising information representing the stop or a future stop of the operational electric power consumption by the electric appliance.

**16.** Device according to claim 15, **characterised in that** the device is included in the electric power plug of the electric appliance or in the electric appliance.

**17.** Message transferred on a part of an electric power network, **characterised in that** the message comprises at least one field comprising information representing a request for obtaining from the part of the electric power network an operational electric power enabling the electric appliance to operate and comprises at least one field comprising information representing the characteristics of the electric appliance.

**18.** Computer program which can be directly loadable into a programmable device, comprising instructions or portions of code for implementing the steps of the method according to claims 1 to 3, when said computer program is executed on a programmable device.

**19.** Computer program which can be directly loadable into a programmable device, comprising instructions or portions of code for implementing the steps of the method according to claim 12 or 13, when said computer program is executed on a programmable device.
